# EUROPÄISCHE PATENTSCHRIFT

(11) **EP 3 036 505 B1**
(45) Veröffentlichungstag und Bekanntmachung des Hinweises auf die Patenterteilung: **19.01.2022**
(21) Anmeldenummer: 14753241.0
(22) Anmeldetag: 19.08.2014
(51) Int. Cl.: G01C 3/08, G01C 15/00

(54) **LASERGERÄT UND HALTEVORRICHTUNG ZUR BEFESTIGUNG EINES LASERGERÄTES AN EINEM HALTEELEMENT**
LASER DEVICE AND FIXING DEVICE FOR MOUNTING A LASER DEVICE ON A RETAINING ELEMENT
APPAREIL LASER ET DISPOSITIF DE SUPPORT POUR LA FIXATION D'UN APPAREIL LASER À UN ÉLÉMENT DE SUPPORT

(30) Priorität: 21.08.2013 EP 13181172
(43) Veröffentlichungstag der Anmeldung: 29.06.2016
(73) Patentinhaber: Hilti Aktiengesellschaft, 9494 Schaan (LI)
(72) Erfinder: SENGER, Alexander, CH-9000 St. Gallen (CH)
(74) Vertreter: Hilti Aktiengesellschaft Corporate Intellectual Property
(86) Internationale Anmeldenummer: PCT/EP2014/067620
(87) Internationale Veröffentlichungsnummer: WO 2015/024923

(56) Entgegenhaltungen:
- WO-A2-2006/051528
- US-A1- 2006 037 205
- US-A1- 2010 170 099

## Beschreibung

### Technisches Gebiet

Die vorliegende Erfindung betrifft ein Lasergerät gemäß dem Oberbegriff des Anspruchs 1. Unter dem Begriff "Lasergerät" werden im Rahmen der vorliegenden Erfindung alle Geräte zusammengefasst, die eine Messeinrichtung mit optischen oder elektro-optischen Komponenten einsetzen. Beispiele für Lasergeräte sind Laserempfänger, Laserdistanzmessgeräte, Punkt- und/oder Linienlasergeräte sowie Rotationslasergeräte.

### Stand der Technik

Die Robustheit von Lasergeräten gegenüber Stürzen konnte durch den Einsatz neuer Werkstoffe, durch Kombination verschiedener Werkstoffe sowie durch konstruktive Maßnahmen verbessert werden. Um Laserstrahlen auf einen Zielpunkt oder einen Zielbereich auszurichten, ist es häufig erforderlich, das Lasergerät an einem Halteelement zu befestigen. Bei den Halteelementen wird zwischen Stativen, mobilen Halteelementen und feststehenden Halteelementen unterschieden. Mobile Halteelemente werden vom Bediener in der Hand gehalten und können im Raum bewegt werden. Beispiele für mobile Halteelemente sind Messlatten, Nivellierlatten, Lotstöcke und Teleskopstangen. Feststehende Halteelemente sind Elemente in der Messumgebung, die eine andere Funktion innehaben und vom Bediener als Halteelemente genutzt werden. Beispiele für feststehende Halteelemente sind Wandschienen, Tür- oder Fensterrahmen und Rohre. Als nachteilig für die Robustheit der Lasergeräte haben sich Haltevorrichtungen erwiesen, mit denen die Lasergeräte an einem Stativ oder einem mobilen Halteelement befestigt werden.

Aus DE 10 2007 007 041 B3 ist ein Stativ mit drei Stativbeinen bekannt, das durch Verdrehen der Stativbeine in eine Haltevorrichtung zur Befestigung eines Lasergerätes an einem rohrförmigen Halteelement verwandelt werden kann. Die Haltevorrichtung umfasst ein Grundelement, eine Befestigungseinrichtung zur Befestigung der Haltevorrichtung am Halteelement und eine Verbindungseinrichtung zur Verbindung der Haltevorrichtung mit dem Lasergerät. Die Stativbeine sind um eine Drehachse drehbar ausgebildet und lassen sich in ein winkelförmiges Grundelement verwandeln, wobei ein Stativbein vertikal und zwei Stativbeine horizontal ausgerichtet sind. Die Befestigungseinrichtung umfasst einen Adapter mit einer V-förmigen Anlagefläche und ein Befestigungsband, der Adapter wird über die V-förmige Anlagefläche an dem rohrförmigen Halteelement positioniert und mittels des Befestigungsbandes am Halteelement befestigt. Da der Adapter nur für die Befestigung an einem rohrförmigen Halteelement benötigt wird, ist die Verbindung zwischen dem Adapter und den Stativbeinen lösbar als Magnetverbindung ausgebildet. Das vertikal ausgerichtete Stativbein umfasst mindestens einen Dauermagneten, der im verbundenen Zustand einem ferromagnetischen Bereich des Adapters gegenüber liegt. Zur Verbindung der Haltevorrichtung mit einem Lasergerät ist am oberen der horizontal ausgerichteten Stativbeine ein Gewindebolzen vorgesehen, der mit einer Gewindebohrung an der Unterseite des Lasergerätes eine Schraubverbindung bildet.

Die Robustheit des Lasergerätes ist durch die Haltevorrichtung reduziert. Bei einem Sturz wird zwar die Magnetverbindung zwischen dem Adapter und dem winkelförmigen Grundelement gelöst, allerdings wird eine Kraft, die auf das hervorstehende Winkelelement einwirkt, über die Schraubverbindung auf das Gerätegehäuse des Lasergerätes übertragen. Die Praxis zeigt, dass bei einem Sturz im Bereich der Schraubverbindung Risse oder sonstige Beschädigungen am Gerätegehäuse auftreten.

US 7,310,886 B offenbart ein bekanntes Gerätesystem bestehend aus einem Lasergerät und einer Haltevorrichtung zur Befestigung des Lasergerätes an einem magnetischen Halteelement. Das Lasergerät umfasst ein Gerätegehäuse, eine Messeinrichtung, die zumindest teilweise innerhalb des Gerätegehäuses angeordnet ist, und eine erste Verbindungseinrichtung zur Verbindung des Lasergerätes mit der Haltevorrichtung. Die Haltevorrichtung umfasst ein L-förmiges Grundelement, eine Befestigungseinrichtung zur Befestigung der Haltevorrichtung am Halteelement und eine zweite Verbindungseinrichtung zur Verbindung der Haltevorrichtung mit dem Lasergerät. Die erste und zweite Verbindungseinrichtung sind als Gewindebohrung und Gewindebolzen ausgebildet, die im verbundenen Zustand eine Schraubverbindung bilden. Alternativ ist das Grundelement dauerhaft mit dem Gerätegehäuse des Lasergerätes verbunden. Die Befestigungseinrichtung umfasst mindestens einen Magnet, bevorzugt zwei Magnete, die im Grundelement angeordnet sind.

Die Robustheit des Lasergerätes bei einem Sturz ist durch die Haltevorrichtung reduziert. Bei einem Sturz wird die Magnetverbindung zwischen der Haltevorrichtung und dem Halteelement gelöst, allerdings wird eine Kraft, die auf das L-förmige Grundelement einwirkt, über die Schraubverbindung auf das Gerätegehäuse des Lasergerätes übertragen. Im Bereich der Schraubverbindung können sich Risse oder sonstige Beschädigungen bilden.

US 2006/0037205 A1 offenbart ein Lasergerät, das als Punkt- und/oder Linienlasergerät ausgebildet ist, und eine Haltevorrichtung zur Befestigung des Lasergerätes an einem Halteelement. Das Lasergerät umfasst ein Gerätegehäuse, eine Messeinrichtung, die zumindest teilweise innerhalb des Gerätegehäuses angeordnet ist, und eine erste Verbindungseinrichtung zur Verbindung des Lasergerätes mit der Haltevorrichtung, wobei die erste Verbindungseinrichtung ein erstes magnetisches Verbindungselement und ein erstes Steckelement aufweist.

### Darstellung der Erfindung

Die Aufgabe der vorliegenden Erfindung besteht darin, ein als Laserempfänger ausgebildetes Lasergerät dahingehend zu verbessern, dass das Risiko einer Beschädigung des Lasergerätes bei einem Sturz reduziert ist.

Diese Aufgabe wird bei dem eingangs genannten Lasergerät erfindungsgemäß durch die Merkmale des Anspruchs 1 gelöst. Vorteilhafte Weiterbildungen sind in den abhängigen Ansprüchen angegeben.

Erfindungsgemäß ist bei dem Lasergerät vorgesehen, dass das Lasergerät als Laserempfänger ausgebildet ist und das Gerätegehäuse des Lasergerätes zweiteilig aus einem Grundgehäuse und einem Schutzgehäuse, das das Grundgehäuse umgibt, ausgebildet ist, wobei die erste Verbindungseinrichtung im Schutzgehäuse angeordnet ist.

Die zweiteilige Ausbildung des Gerätegehäuses aus einem Grundgehäuse und einem Schutzgehäuse hat den Vorteil, dass die erste Verbindungseinrichtung, die zur Verbindung des Lasergerätes mit einer Haltevorrichtung notwendig ist, an herkömmlichen Lasergeräten nachgerüstet werden kann. Außerdem kann das Schutzgehäuse im Hinblick auf eine hohe Robustheit gegenüber Stürzen optimiert werden. Das Schutzgehäuse kann vorstehende Stoßfangelemente aufweisen, die bevorzugt an den Übergängen der Gehäuseflächen des Schutzgehäuses in Form von Kanten oder Ecken ausgebildet sind. Das Schutzgehäuse wird so ausgebildet, dass das Lasergerät auch ohne Haltevorrichtung mit dem Schutzgehäuse eingesetzt werden kann.

Das erste magnetische Verbindungselement des Lasergerätes bildet mit einem zweiten magnetischen Verbindungselement einer Haltevorrichtung eine Magnetverbindung und das erste Steckelement des Lasergerätes bildet mit einem komplementär ausgebildeten, zweiten Steckelement der Haltevorrichtung eine Steckverbindung. Die Steckverbindung sorgt dafür, dass das Lasergerät und die Haltevorrichtung im verbundenen Zustand in einer definierten Position zueinander ausgerichtet sind, über die Magnetverbindung wird das Lasergerät lösbar mit der Haltevorrichtung verbunden. Dabei wird die Stärke der Magnetverbindung so eingestellt, dass das Lasergerät unter normalen Betriebsbedingungen sicher an einem Halteelement befestigt ist, die Magnetverbindung bei einer starken Krafteinwirkung auf das Lasergerät aber gelöst wird.

Eine Steckverbindung ist eine formschlüssige Verbindung zwischen einem ersten und zweiten Steckelement, wobei die Steckelemente entlang einer Steckrichtung geführt werden und in einer Ebene senkrecht zur Steckrichtung eine formschlüssige Verbindung bilden. Die Steckelemente sind als zylinderförmiger Stecker mit einer beliebigen Querschnittsfläche und als komplementäre Steckbuchse ausgebildet; die Steckrichtung verläuft parallel zur Zylinderachse der Steckelemente. Eine Magnetverbindung ist eine kraftschlüssige Verbindung zwischen einem ersten und zweiten magnetischen Verbindungselement. Dabei kann die Magnetverbindung zwischen zwei Permanentmagneten oder zwischen einem Permanentmagnet und einem Haftelement aus einem ferromagnetischen Material oder einem ferrimagnetischen Material aufgebaut werden.

Wird ein Material einem Magnetfeld ausgesetzt, kommt es zu einer Magnetisierung. Durch die Magnetisierung entsteht im Material ein zusätzliches magnetisches Feld, das sich mit dem äußeren Magnetfeld überlagert. Dabei werden Materialien mit diamagnetischen, paramagnetischen und ferromagnetischen Eigenschaften unterschieden. In diamagnetischen Materialien ist die Magnetisierung dem äußeren Magnetfeld entgegengerichtet und in paramagnetischen Materialen ist die Magnetisierung dem äußeren Magnetfeld gleichgerichtet. In ferromagnetischen Materialien ist die Magnetisierung dem äußeren Magnetfeld ebenfalls gleichgerichtet, aber aufgrund einer besonderen Wechselwirkung, der Austauschwechselwirkung, sehr viel stabiler als in paramagnetischen Materialien. Ferrimagnetische Materialien verhalten sich wie schwächere ferromagnetische Materialien und entstehen durch Überlagerung zweier ferromagnetischer Materialien mit unterschiedlicher Ausrichtung, wobei sich die magnetischen Eigenschaften nicht vollständig kompensieren.

Bevorzugt ist das erste Steckelement als Steckbuchse ausgebildet, die in das Gerätegehäuse des Lasergerätes integriert ist. Das erste Steckelement als Steckbuchse auszubilden, ist vor allem für Lasergeräte vorteilhaft, die auch ohne eine Haltevorrichtung eingesetzt werden. Wenn die Steckbuchse in das Gerätegehäuse integriert ist, steht das erste Steckelement nicht aus dem Gerätegehäuse hervor und behindert den Bediener nicht beim Arbeiten mit dem Lasergerät.

In einer ersten bevorzugten Ausführungsform ist das erste magnetische Verbindungselement als Permanentmagnet ausgebildet oder umfasst einen Permanentmagneten. Der Permanentmagnet bildet mit einem zweiten magnetischen Verbindungselement einer Haltevorrichtung eine Magnetverbindung, wobei das zweite magnetische Verbindungselement als Permanentmagnet oder als ferromagnetisches oder ferrimagnetisches Haftelement ausgebildet ist. Als Materialien für den Permanentmagneten können Neodym-Werkstoffe oder Ferrit-Werkstoffe eingesetzt werden. Neodym-Magnete haben gegenüber Ferrit-Magneten den Vorteil einer höheren Haftkraft pro Volumen oder bei einer gegebenen Haftkraft durch das geringere Volumen einen geringeren Platzbedarf. Ferrit-Magnete sind kostengünstig, weisen eine Temperaturbeständigkeit bis ca. 250° auf und sind rostbeständig. Wenn wenig Volumen zur Verfügung steht und/oder das Lasergerät möglichst leicht sein soll, eignen sich Neodym-Magnete.

Der Permanentmagnet ist besonders bevorzugt als zylinderförmiger Permanentmagnet oder kugelförmiger Permanentmagnet ausgebildet, wobei die Pole des Permanentmagneten parallel zur Steckrichtung des ersten Steckelementes angeordnet sind. Zylinderförmige Permanentmagnete sind in Form eines Zylinders mit einer beliebigen Querschnittsfläche und einer Höhe ausgebildet. Beispiele für zylinderförmige Permanentmagnete sind Quader oder Würfel, die eine quadratische Grundfläche aufweisen, und Scheiben oder Stäbe, die eine kreisförmige Grundfläche aufweisen. Der Permanentmagnet kann auch als Hufeisenmagnet ausgebildet sein, der einen gebogenen Stabmagnet darstellt. Die Form des Permanentmagneten wird an die Gegebenheiten des Lasergerätes und den verfügbaren Raum angepasst.

Bei einem zylinderförmigen Permanentmagneten sind die Pole auf der Grund- und Deckfläche des Zylinders angeordnet und der Permanentmagnet ist durch die Höhe magnetisiert (axiale Magnetisierung); bei einem kugelförmigen Permanentmagneten sind die Pole einander gegenüber liegend angeordnet. Die Anordnung der Pole des Permanentmagneten parallel zur Steckrichtung hat den Vorteil, dass sich die Haftkraft zwischen den magnetischen Verbindungselementen mit dem Abstand verändert und dann am größten ist, wenn der Abstand so klein wie möglich ist. Der Aufbau der Magnetverbindung ermöglicht es, das Lasergerät in einer definierten Position mit einer Haltevorrichtung zu verbinden. Die Magnetverbindung weist ein Kraftmaximum bei geschlossener Steckverbindung auf und fixiert das Lasergerät und die Haltevorrichtung in der gewünschten Position.

Besonders bevorzugt weist das erste magnetische Verbindungselement zusätzlich ein ferromagnetisches oder ferrimagnetisches Element auf. Das ferromagnetische oder ferrimagnetische Element umgibt den Permanentmagneten und verändert das magnetische Feld des Permanentmagneten. Dabei wird das ferromagnetische oder ferrimagnetische Element so angeordnet, dass die magnetischen Feldlinien zum zweiten magnetischen Verbindungselement gerichtet sind und die Haftkraft verstärkt wird. Ein Beispiel ist ein axial magnetisierter Scheibenmagnet, der von einem Stahltopf umgeben ist, wobei der Scheibenmagnet im Kontaktbereich zum Haftelement nicht abgeschirmt ist.

In einer zweiten bevorzugten Ausführungsform ist das erste magnetische Verbindungselement als ferromagnetisches oder ferrimagnetisches Haftelement ausgebildet. Das Haftelement bildet mit einem zweiten magnetischen Verbindungselement einer Haltevorrichtung eine Magnetverbindung, wobei das zweite magnetische Verbindungselement als Permanentmagnet ausgebildet ist oder einen Permanentmagneten umfasst.

Besonders bevorzugt weist die erste Verbindungseinrichtung zwei erste magnetische Verbindungselemente und/oder zwei erste Steckelemente auf. Eine erste Verbindungseinrichtung mit zwei ersten magnetischen Verbindungselementen hat den Vorteil, dass die Anordnung der magnetischen Verbindungselemente bezüglich des Geräteschwerpunktes optimiert werden kann. Um sicherzustellen, dass das Lasergerät nur in der gewünschten Ausrichtung mit einer Haltevorrichtung verbunden werden kann, können die beiden ersten Steckelemente unterschiedlich groß ausgebildet sein oder sie können unterschiedliche Querschnittsformen aufweisen.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

### Es zeigen:

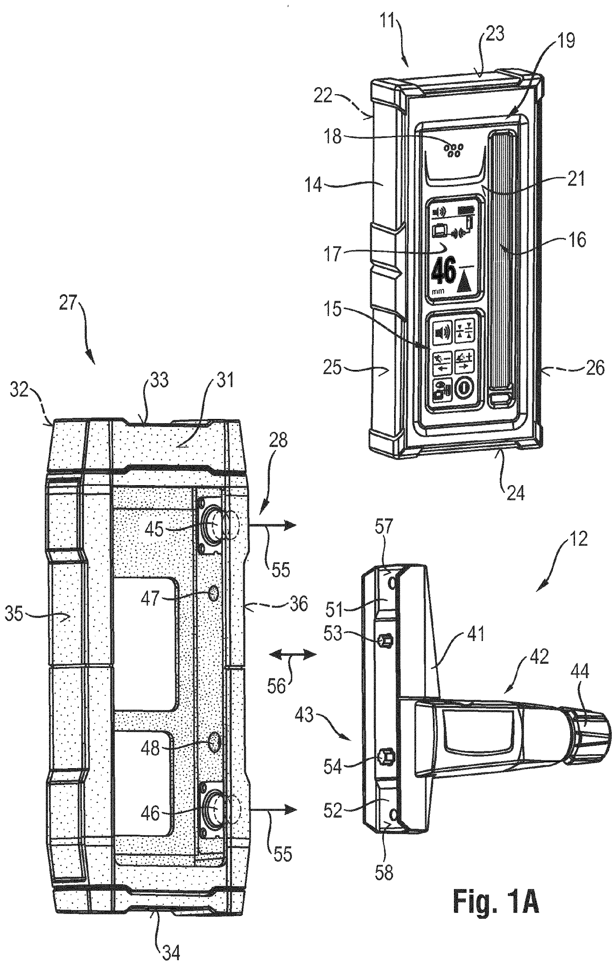

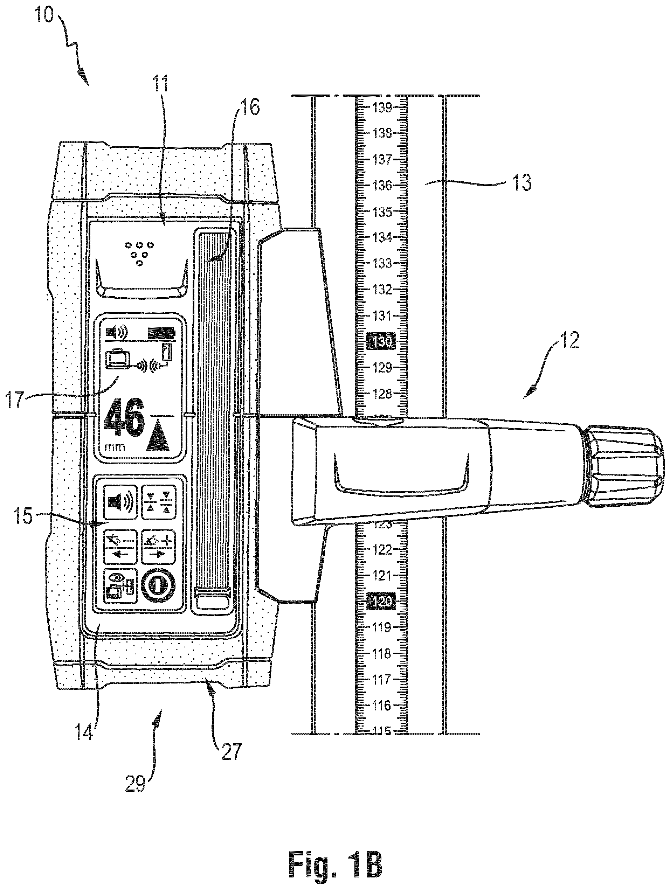

- FIGN. 1A, B ein: erfindungsgemäßes Lasergerät, das als Laserempfänger ausgebildet ist, und eine Haltevorrichtung zur Befestigung des Laserempfängers an einer Messlatte;

**FIGN. 1A****, B** zeigen ein Gerätesystem **10** bestehend aus einem, als Laserempfänger **11** ausgebildeten, erfindungsgemäßen Lasergerät und einer Haltevorrichtung **12** zur Befestigung des Laserempfängers 11 an einem länglichen Halteelement, das als Messlatte **13** ausgebildet ist. Dabei zeigt FIG. 1A den Laserempfänger 11 und die Haltevorrichtung 12 im unverbundenen Zustand und FIG. 1B zeigt den Laserempfänger 11, der mittels der Haltevorrichtung 12 an der Messlatte 13 befestigt ist.

Der Laserempfänger 11 ist ein Hilfsmittel für Punkt-, Linien- oder Rotationslasergeräte, das bei schlecht sichtbaren Laserstrahlen eingesetzt wird, um die Sichtbarkeit der Laserstrahlen zu verbessern. Dabei kann der Laserempfänger 11 vom Bediener direkt in den Laserstrahl gehalten werden, oder der Laserempfänger 11 wird an einem Halteelement befestigt. Bei Halteelementen wird zwischen Stativen, mobilen Halteelementen und feststehenden Halteelementen unterschieden. Feststehende Halteelemente sind Elemente in der Messumgebung, die eine andere Funktion innehaben und vom Bediener als Halteelemente genutzt werden, wie beispielsweise Wandschienen, Tür- oder Fensterrahmen und Rohre. Mobile Halteelemente werden vom Bediener in der Hand gehalten und können im Raum bewegt werden, wie beispielsweise Messlatten, Nivellierlatten und Lotstöcke. Dabei sind die mobilen Halteelemente als längliche Halteelemente ausgebildet und weisen eine Querschnittsabmessung auf, die sehr viel kleiner als die Abmessung in Längsrichtung ist.

Der Laserempfänger 11 umfasst ein Grundgehäuse **14,** eine Bedienungseinrichtung **15** zur Bedienung des Laserempfängers 11, eine Detektoreinrichtung **16** zur Erfassung eines Laserstrahls, ein Display **17** und eine akustische Anzeigeeinrichtung **18.** Die elektrischen Komponenten des Laserempfängers 11 werden auch als Messeinrichtung **19** bezeichnet. Die Messeinrichtung 19 ist zumindest teilweise vom Grundgehäuse 14 umgeben oder in das Grundgehäuse 14 integriert. Das Grundgehäuse 14 umfasst eine Vorderfläche **21,** eine der Vorderfläche 21 gegenüber liegende Rückfläche **22,** eine Oberseite **23,** eine der Oberseite gegenüber liegende Unterseite **24** und zwei Seitenflächen **25, 26.**

Die Bedienungseinrichtung 15, die Detektoreinrichtung 16, das Display 17 und die akustische Anzeigeeinrichtung 18 sind auf der Vorderfläche 21 des Grundgehäuses 14 angeordnet. Um einen hohen Bedienkomfort bei der Bedienung des Laserempfängers 11 zu bieten, sind die Vorderfläche 21 und die Rückfläche 22 die beiden größten Gehäuseflächen des Grundgehäuses 14 mit einer längeren Seite (Länge) und einer kürzeren Seite (Breite). Die beiden Seitenflächen 25, 26 grenzen an die längere Seite der Vorderfläche 21 und sind durch die Länge und eine Tiefe des Grundgehäuses 14 festgelegt.

Der Laserempfänger 11 umfasst zusätzlich ein Schutzgehäuse **27,** das das Grundgehäuse 14 im verbundenen Zustand umgibt (FIG. 1B), und eine erste Verbindungseinrichtung **28** zur Verbindung des Laserempfängers 11 mit der Haltevorrichtung 12. Das Grundgehäuse 14 und das Schutzgehäuse 27 werden gemeinsam als Gerätegehäuse **29** des Laserempfängers 11 bezeichnet. Die zweiteilige Ausbildung des Gerätegehäuses 29 aus Grundgehäuse 14 und Schutzgehäuse 27 hat den Vorteil, dass die erfindungsgemäße Haltevorrichtung 12 an herkömmlichen Laserempfängern nachgerüstet werden kann.

Das Schutzgehäuse 27 umfasst, wie das Grundgehäuse 14, eine Vorderfläche **31,** eine der Vorderfläche 31 gegenüber liegende Rückfläche **32,** eine Oberseite **33,** eine der Oberseite gegenüber liegende Unterseite **34** und zwei Seitenflächen **35, 36.** Im verbundenen Zustand liegen die Vorder- und Rückflächen 31, 32, die Ober- und Unterseite 33, 34 und die Seitenflächen 35, 36 des Schutzgehäuses 27 den entsprechenden Gehäuseflächen 21-26 des Grundgehäuses 14 gegenüber. Das Schutzgehäuse 27 kann aus einem elastomeren oder thermoplastisch-elastomeren Kunststoff ausgebildet sein. Bei einem Sturz des Laserempfängers 11 schützt das Schutzgehäuse 27 den Laserempfänger 11 vor Beschädigung. Über die Materialeigenschaften des Kunststoffes wird eingestellt, dass sich das Schutzgehäuse 27 bei einem Sturz elastisch verformen und anschließend in die unverformte Gestalt zurückkehren kann.

Das Schutzgehäuse 27 kann vorstehende Stoßfangelemente aufweisen, die bevorzugt an den Übergängen der Gehäuseflächen 31-36 des Schutzgehäuses 27 in Form von Kanten oder Ecken ausgebildet sind. Am Grundgehäuse 14 können ebenfalls Schutzelemente vorgesehen sein, die den Laserempfänger 11 schützen, wenn der Laserempfänger 11 vom Bediener ohne Schutzgehäuse 27 und Haltevorrichtung 12 in den Laserstrahl gehalten wird. Dabei ist das Schutzgehäuse 27 so ausgebildet, dass der Laserempfänger 11 auch ohne Haltevorrichtung 12 mit dem Schutzgehäuse 27 eingesetzt werden kann.

Die Haltevorrichtung 12 umfasst ein Grundelement **41**, eine, mit dem Grundelement 41 verbundene, Befestigungseinrichtung **42** zur Befestigung der Haltevorrichtung 12 an der Messlatte 13, und eine, mit dem Grundelement 41 verbundene, zweite Verbindungseinrichtung **43** zur Verbindung der Haltevorrichtung 12 mit dem Laserempfänger 11. Die Haltevorrichtung 12 verbindet den Laserempfänger 11 starr mit der Messlatte 13, d.h. der Laserempfänger 11 ist im verbundenen Zustand bezüglich der Messlatte 13 nicht beweglich. Die Befestigungseinrichtung 42 ist beispielsweise als Klemmeinrichtung mit ebenen Klemmbacken ausgebildet, die über ein Verstellelement **44** verstellt werden, bis die Klemmbacken an den Seitenflächen der Messlatte 13 anliegen und die Haltevorrichtung 12 an der Messlatte 13 geklemmt ist.

Der Laserempfänger 11 und die Haltevorrichtung 12 werden mittels der ersten und zweiten Verbindungseinrichtung 28, 43 lösbar miteinander verbunden. Die Verbindung zwischen dem Laserempfänger 11 und der Haltevorrichtung 12 ist als kombinierte Magnet- und Steckverbindung ausgebildet, d.h. der Laserempfänger 11 und die Haltevorrichtung 12 sind über eine Magnetverbindung und zusätzlich über eine Steckverbindung miteinander verbunden. Die Steckverbindung sorgt dafür, dass der Laserempfänger 11 und die Haltevorrichtung 12 im verbundenen Zustand in einer definierten Position zueinander ausgerichtet sind. Über die Magnetverbindung sind der Laserempfänger 11 und die Haltevorrichtung 12 lösbar miteinander verbunden. Dabei wird die Stärke der Magnetverbindung so eingestellt, dass der Laserempfänger 11 im Betrieb sicher über die Haltevorrichtung 12 an der Messlatte 13 befestigt ist und die Magnetverbindung bei einer starken Krafteinwirkung auf den Laserempfänger 11 gelöst wird.

Die erste Verbindungseinrichtung 28 des Laserempfängers 11 umfasst zwei erste magnetische Verbindungselemente **45, 46** und zwei erste Steckelemente **47, 48.** Die zweite Verbindungseinrichtung 43 der Haltevorrichtung 12 umfasst zwei zweite magnetische Verbindungselemente **51, 52** und zwei zweite Steckelemente **53, 54.** Im verbundenen Zustand bilden die ersten und zweiten Steckelemente 47, 48, 53, 54 die Steckverbindung und die ersten und zweiten magnetischen Verbindungselemente 45, 46, 51, 52 die Magnetverbindung. Mittels der Steckelemente 47, 48, 53, 54 werden der Laserempfänger 11 und die Haltevorrichtung 12 in einer definierten Position zueinander ausgerichtet und die magnetischen Verbindungselemente 45, 46, 51, 52 sorgen dafür, dass der Laserempfänger 11 und die Haltevorrichtung 12 in der Position lösbar fixiert werden. Dabei wird die Haftkraft der Magnetverbindung so eingestellt, dass der Laserempfänger 11 unter normalen Betriebsbedingungen sicher an der Messlatte 13 befestigt ist, die Magnetverbindung bei einer starken Krafteinwirkung auf den Laserempfänger 11 aber gelöst wird.

Die ersten magnetischen Verbindungselemente des Laserempfängers 11 sind als Permanentmagnete 45, 46 ausgebildet, die in der Seitenfläche 36 des Schutzgehäuses 27 angeordnet sind, und die zweiten magnetischen Verbindungselemente der Haltevorrichtung 12 sind als ferromagnetische Haftelemente 51, 52 ausgebildet, die den Permanentmagneten 45, 46 im verbundenen Zustand gegenüber liegen. Alternativ zur Ausführungsform der FIGN. 1A, B können die Permanentmagnete 45, 46 an der Haltevorrichtung 12 und die ferromagnetischen Haftelemente 51, 52 am Laserempfänger 11 vorgesehen sein oder der Laserempfänger 11 und die Haltevorrichtung 12 weisen jeweils einen Permanentmagnet 45, 46 und ein ferromagnetisches Haftelement 51, 52 auf.

Die Permanentmagnete 45, 46 sind als Kreiszylinder mit kreisförmigen Grund- und Deckflächen und einer Höhe ausgebildet. Die Pole N, S der Permanentmagnete 45, 46 sind auf den Grund- und Deckflächen angeordnet, d.h. die Permanentmagnete 45, 46 sind durch die Höhe entlang einer Magnetisierungsrichtung **55,** die parallel zur Längsachse verläuft, magnetisiert. Die Höhe der Permanentmagnete 45, 46 ist kleiner als der Durchmesser und beträgt bevorzugt ca. 50 % des Durchmessers. Die ferromagnetischen Haftelemente 51, 52 liegen den Permanentmagneten 45, 46 im verbundenen Zustand gegenüber; die Haftkraft zwischen den magnetischen Verbindungselementen 45, 46, 51, 52 nimmt zu, je kleiner der Abstand zwischen den Permanentmagneten 45, 46 und den Haftelementen 51, 52 ist.

Die ersten Steckelemente des Laserempfängers 11 sind als zylinderförmige Steckbuchsen 47, 48 ausgebildet, die in die Seitenfläche 36 des Schutzgehäuses 27 integriert sind, und die zweiten Steckelemente der Haltevorrichtung 12 sind als zylinderförmige Stecker 53, 54 komplementär zu den Steckbuchsen 47, 48 ausgebildet. Die Steckelemente 47, 48, 53, 54 werden entlang einer Steckrichtung **56** bewegt, die parallel zur Zylinderachse bzw. Längsachse der Steckelemente verläuft, und bilden in einer Ebene senkrecht zur Steckrichtung 56 eine formschlüssige Verbindung. Um sicherzustellen, dass der Laserempfänger 11 und die Haltevorrichtung 12 nur in der gewünschten Ausrichtung miteinander verbunden werden können, können die beiden Stecker 53, 54 unterschiedlich groß ausgebildet sein und/oder eine unterschiedliche Querschnittsform aufweisen. FIG. 1A zeigt zwei unterschiedlich große Stecker 53, 54 mit der gleichen kreuzförmigen Querschnittsform.

Die Haltevorrichtung 12 wird mit den Steckern 53, 54 entlang der Steckrichtung 56 in die Steckbuchsen 47, 48 des Laserempfängers 11 bewegt, bis die Seitenfläche 36 des Schutzgehäuses 27 an den ferromagnetischen Haftelementen 51, 52 anschlägt. Die Seitenfläche 36 des Schutzgehäuses 27 ist an die Oberflächen **57, 58** der ferromagnetischen Haftelemente 51, 52 angepasst. Um eine definierte Anlage sicherzustellen, sind die Stecker 53, 54 kürzer als die Steckbuchsen 47, 48 ausgebildet und im verbundenen Zustand von Laserempfänger 11 und Haltevorrichtung 12, d.h. bei geschlossener Steckverbindung der Steckelemente 47, 48, 53, 54, besteht in axialer Richtung (entlang der Steckrichtung 56) ein schmaler Spalt. Die Steckverbindung wird als geschlossen bezeichnet, wenn die Steckelemente 47, 48, 53, 54 senkrecht zur Steckrichtung 56 eine formschlüssige Verbindung bilden und der Laserempfänger 11 und die Haltevorrichtung 12 entlang der Steckrichtung 56 bis zu einem Anschlag aufeinander zu bewegt wurden.

Das Kraftmaximum der Magnetverbindung liegt vor, wenn die Steckverbindung der ersten und zweiten Steckelemente 47, 48, 53, 54 geschlossen ist. Bei geschlossener Steckverbindung ist der Abstand zwischen den Permanentmagneten 45, 46 und den Haftelementen 51, 52 am kleinsten und die Haftkraft zwischen den magnetischen Verbindungselementen 45, 46, 51, 52 am größten. Die Permanentmagnete 45, 46 sind im Schutzgehäuses 27 angeordnet und haben keinen direkten Kontakt mit den ferromagnetischen Haftelementen 51, 52, um die Permanentmagnete 45, 46 mechanisch nicht zu belasten. Da herkömmliche Permanentmagnete gegenüber mechanischen Belastungen empfindlich sind, wird die Lebensdauer der Permanentmagnete 45, 46 durch die räumliche Trennung erhöht und die Reproduzierbarkeit der magnetischen Haltekräfte verbessert. Außerdem sind die Permanentmagnete 45, 46 vor Korrosion geschützt.

Die beiden Permanentmagnete 45, 46, die in der Seitenfläche 36 des Schutzgehäuses 27 angeordnet sind, sind außerhalb des Schwerpunktes des Laserempfängers 11 angeordnet. Dabei sind der eine Permanentmagnet 45 oberhalb und der andere Permanentmagnet 46 unterhalb des Schwerpunktes angeordnet. Durch die Anordnung eines Permanentmagneten 45 oberhalb des Schwerpunktes wird die Gefahr einer Verkippung des Laserempfängers 11 reduziert. Ein typischer Störfall entsteht in der Praxis, wenn der Laserempfänger 11 an der Messlatte 13 befestigt ist und die Messlatte 13 mit der Spitze auf einen Untergrund stößt. Da der Laserempfänger 11 seitlich an der Messlatte 13 befestigt ist, entsteht ein Drehmoment, das die Unterkante der Haltevorrichtung 12 beim unteren Haftelement 58 abkippen lässt. Je länger der Hebel ist, den der obere Permanentmagnet 45 mit der Unterkante des unteren Haftelementes 58 bildet, umso grösser ist die kritische Grenze, die das Drehmoment überschreiten muss, bevor der Laserempfänger 11 verkippt. Die Verwendung von zwei Permanentmagneten 45, 46 ist beispielsweise vorteilhaft, wenn der Laserempfänger 11 mit der Messlatte 13 waagerecht transportiert wird.

Der Laserempfänger 11 ist mittels der Haltevorrichtung 12 an der Messlatte 13 befestigt. Neben der Messlatte 13 kann die Haltevorrichtung 12 an allen länglichen Halteelementen befestigt werden. Längliche Halteelemente besitzen einen Durchmesser, der kleiner als die Länge ist, und können als Stab, Rohr oder Profil ausgebildet sein. Stabförmige Halteelemente weisen einen geschlossenen Querschnitt auf, rohrförmige Halteelemente einen hohlen, geschlossenen Querschnitt und profilförmige Halteelemente einen offenen Querschnitt. Die Anlagefläche kann eben ausgebildet sein oder eine V-Form aufweisen. Eine ebene Anlagefläche eignet sich für Halteelemente mit rechteckigem Querschnitt und eine V-förmige Anlagefläche eignet sich besonders für Halteelemente mit einem runden oder abgerundeten Querschnitt.

## Patentansprüche

1. Lasergerät (11) aufweisend:
▪ ein Gerätegehäuse (29),
▪ eine Messeinrichtung (19), die zumindest teilweise innerhalb des Gerätegehäuses (29) angeordnet ist, und
▪ eine, mit dem Gerätegehäuse (29) verbundene, erste Verbindungseinrichtung (28) zur Verbindung des Lasergerätes (11) mit einer Haltevorrichtung (12),
wobei die erste Verbindungseinrichtung (28) ein erstes magnetisches Verbindungselement (45, 46) und ein erstes Steckelement (47, 48) aufweist,
**dadurch gekennzeichnet, dass** das Lasergerät (11) als Laserempfänger ausgebildet ist und das Gerätegehäuse (29) zweiteilig aus einem Grundgehäuse (14) und einem Schutzgehäuse (27), das das Grundgehäuse (14) umgibt, ausgebildet ist, wobei die erste Verbindungseinrichtung (28) im Schutzgehäuse (27) angeordnet ist.

2. Lasergerät nach Anspruch 1, **dadurch gekennzeichnet, dass** das erste Steckelement als Steckbuchse (47, 48) ausgebildet ist.

3. Lasergerät nach Anspruch 1, **dadurch gekennzeichnet, dass** das erste magnetische Verbindungselement als Permanentmagnet (45, 46) ausgebildet ist oder einen Permanentmagneten umfasst.

4. Lasergerät nach Anspruch 3, **dadurch gekennzeichnet, dass** der Permanentmagnet als zylinderförmiger Permanentmagnet (45, 46) oder kugelförmiger Permanentmagnet ausgebildet ist, wobei die Pole des Permanentmagneten parallel zur Steckrichtung des ersten Steckelementes (47, 48) angeordnet sind.

5. Lasergerät nach einem der Ansprüche 3 bis 4, **dadurch gekennzeichnet, dass** das erste magnetische Verbindungselement zusätzlich ein ferromagnetisches oder ferrimagnetisches Element aufweist.

6. Lasergerät nach Anspruch 1, **dadurch gekennzeichnet, dass** das erste magnetische Verbindungselement als ferromagnetisches oder ferrimagnetisches Haftelement ausgebildet ist.

7. Lasergerät nach einem der Ansprüche 1 bis 6, **dadurch gekennzeichnet, dass** die erste Verbindungseinrichtung (28) zwei erste magnetische Verbindungselemente (45, 46) und/oder zwei erste Steckelemente (47, 48) aufweist.

## Claims

1. Laser device (11) comprising:
▪ a device housing (29),
▪ a measuring means (19), which is at least partially arranged inside the device housing (29), and
▪ a first connecting means (28) connected to the device housing (29) and intended for connecting the laser device (11) to a holding fixture (12),
the first connecting means (28) having a first magnetic connecting element (45, 46) and a first plug-in element (47, 48),
**characterized in that** the laser device (11) is formed as a laser receiver and the device housing (29) is formed in two parts, comprising a main housing (14) and a protective housing (27), which surrounds the main housing (14), the first connecting means (28) being arranged in the protective housing (27).

2. Laser device according to Claim 1, **characterized in that** the first plug-in element is formed as a socket (47, 48).

3. Laser device according to Claim 1, **characterized in that** the first magnetic connecting element is formed as a permanent magnet (45, 46) or comprises a permanent magnet.

4. Laser device according to Claim 3, **characterized in that** the permanent magnet is formed as a cylindrical permanent magnet (45, 46) or spherical permanent magnet, the poles of the permanent magnet being arranged parallel to the plugging direction of the first plug-in element (47, 48).

5. Laser device according to either of Claims 3 and 4, **characterized in that** the first magnetic connecting element additionally has a ferromagnetic or ferrimagnetic element.

6. Laser device according to Claim 1, **characterized in that** the first magnetic connecting element is formed as a ferromagnetic or ferrimagnetic attaching element.

7. Laser device according to one of Claims 1 to 6, **characterized in that** the first connecting means (28) has two first magnetic connecting elements (45, 46) and/or two first plug-in elements (47, 48).

## Revendications

1. Appareil laser (11) comportant :
▪ un boîtier d'appareil (29),
▪ un moyen de mesure (19) qui est disposé au moins partiellement à l'intérieur du boîtier d'appareil (29), et
▪ un premier moyen de liaison (28) relié au boîtier d'appareil (29) et destiné à relier l'appareil laser (11) à un dispositif de retenue (12),
le premier moyen de liaison (28) comportant un premier élément de liaison magnétique (45, 46) et un premier élément enfichable (47, 48),
**caractérisé en ce que** l'appareil laser (11) est conçu comme un récepteur laser et le boîtier d'appareil (29) est conçu en deux parties à partir d'un boîtier de base (14) et
d'un boîtier de protection (27) qui entoure le boîtier de base (14), le premier moyen de liaison (28) est disposé dans le boîtier de protection (27).

2. Appareil laser selon la revendication 1, **caractérisé en ce que** le premier élément enfichable est conçu sous la forme d'une douille enfichable (47, 48).

3. Appareil laser selon la revendication 1, **caractérisé en ce que** le premier élément de liaison magnétique est conçu comme un aimant permanent (45, 46) ou comprend un aimant permanent.

4. Appareil laser selon la revendication 3, **caractérisé en ce que** l'aimant permanent est conçu comme un aimant permanent cylindrique (45, 46) ou un aimant permanent sphérique, les pôles de l'aimant permanent étant disposés parallèlement au sens d'enfichage du premier élément enfichable (47, 48).

5. Appareil laser selon l'une des revendications 3 à 4, **caractérisé en ce que** le premier élément de liaison magnétique comporte en outre un élément ferromagnétique ou ferrimagnétique.

6. Appareil laser selon la revendication 1, **caractérisé en ce que** le premier élément de liaison magnétique est conçu comme un élément adhésif ferromagnétique ou ferrimagnétique.

7. Appareil laser selon l'une des revendications 1 à 6, **caractérisé en ce que** le premier moyen de liaison (28) comporte deux premiers éléments de liaison magnétiques (45, 46) et/ou deux premiers éléments enfichables (47, 48).
